# FASCICULE DE BREVET EUROPEEN

(11) **EP 2 873 583 B1**
(45) Date de publication et mention de la délivrance du brevet: **27.03.2019**
(21) Numéro de dépôt: 14193910.8
(22) Date de dépôt: 19.11.2014
(51) Int. Cl.: B61D 35/00

(54) **Système de stockage et de distribution d'eau pour toilettes compactes**
System zur Speicherung und Verteilung von Wasser für Kompakttoiletten
System for storing and dispensing water for a compact toilet

(30) Priorité: 19.11.2013 FR 1361365
(43) Date de publication de la demande: 20.05.2015
(73) Titulaire: ALSTOM Transport Technologies, 93400 Saint-Ouen (FR)
(72) Inventeur: Desbons, Guillaume, 75015 Paris (FR)
(74) Mandataire: Lavoix

(56) Documents cités:
- EP-A1- 0 363 012
- DE-A1- 10 229 799
- US-A- 3 594 825
- US-A- 6 032 687
- US-B1- 6 702 942
- US-B1- 7 207 073

## Description

La présente invention concerne un système de stockage et de distribution d'eau, du type comprenant :
- une source d'eau grise ;
- un réservoir d'eau grise apte à stocker et à distribuer des eaux grises provenant de la source d'eau grise et comportant une entrée d'eau propre, une entrée d'eau grise, une sortie d'eau grise et une sortie de vidange ;
- des toilettes comportant une cuvette et aptes à recevoir des eaux grises du réservoir d'eau grise pour une opération de chasse ;
- un réservoir d'eau usée apte à recevoir et à stocker des eaux grises du réservoir d'eau grise et des produits de chasse des toilettes ;
- un conduit d'eau propre relié à une source d'eau propre ;
- un conduit d'eau grise reliant l'entrée d'eau grise avec la source d'eau grise ;
- un conduit d'eau de chasse des toilettes reliant la sortie d'eau grise avec les toilettes.

Une installation sanitaire montée, par exemple, sur des trains à grande vitesse inclut généralement un lavabo alimenté par de l'eau propre et des toilettes alimentées par une source d'eau.

Après chaque utilisation, le lavabo rejette des eaux de lavage, dites également eaux grises. Comme ces eaux sont peu chargées en matières polluantes, il existe des systèmes permettant de réutiliser les eaux grises comme liquide de chasse pour les toilettes.

L'utilisation de ce type de systèmes est particulièrement avantageuse dans les trains à grande vitesse, où ils permettent de diminuer la consommation d'eau propre en diminuant ainsi le poids total du train.

Ainsi, par exemple, les documents EP 2 484 574 A1 et EP 0 363 012 A1 décrivent un système de stockage et de distribution d'eau du type précité, comportant un réservoir d'eau grise apte à stocker les eaux grises rejetées par le lavabo et à les transférer vers les toilettes pour une opération de chasse.

Les produits chassés des toilettes sont ensuite stockés dans un réservoir d'eau usée.

Toutefois, cette solution présente un certain nombre d'inconvénients. En particulier, le système décrit est relativement cher en exploitation. La présente invention a pour but de proposer un système du même type apte à fonctionner de manière particulièrement économique.

A cet effet, l'invention a pour objet un système de stockage et de distribution d'eau, du type précité, dans lequel :
- le réservoir d'eau usée est muni d'un évent pour son maintien sous la pression atmosphérique ;
- les toilettes comportent en outre un réservoir intermédiaire, muni de moyens de mise sous vide sélective, relié par une vanne d'entrée à la cuvette et par une vanne de sortie au réservoir d'eau usée.

Selon des modes particuliers de réalisation de l'invention, le système comporte, l'une ou plusieurs des caractéristiques suivantes :
- un conduit de vidange relie la sortie de vidange avec le réservoir d'eau usée, le conduit de vidange comportant une pompe permettant de transférer les eaux grises du réservoir d'eau grise vers le réservoir d'eau usée ;
- le réservoir intermédiaire est en outre muni de moyens de mise sous pression sélective ;
- la source d'eau grise est un lavabo alimenté avec de l'eau propre par la source d'eau propre et apte à rejeter de l'eau grise dans le conduit d'eau grise après chaque utilisation ;
- le conduit de vidange comporte en outre un clapet anti-retour permettant le passage des eaux uniquement en provenance du réservoir d'eau grise ;
- le conduit d'eau propre comporte un clapet anti-retour permettant le passage de l'eau propre uniquement en provenance de la source d'eau propre ;
- le conduit d'eau propre comporte en outre une vanne permettant de réguler le passage de l'eau propre dans ce conduit ;
- le réservoir d'eau grise comporte un premier détecteur permettant de détecter un niveau bas des eaux grises contenues dans le réservoir d'eau grise et un deuxième détecteur permettant de détecter un niveau haut des eaux grises contenues dans le réservoir d'eau grise, les deux détecteurs étant aptes à commander le remplissage ou la vidange du réservoir d'eau grise ;
- le réservoir d'eau grise comporte une sortie d'évacuation d'eaux grises reliée à l'extérieur du système par un conduit d'évacuation ;
- le réservoir d'eau grise comporte une entrée de rinçage ;
- il comporte en outre un conduit de by-pass reliant le conduit d'eau propre avec le conduit d'eau de chasse des toilettes et contournant le réservoir d'eau grise, et des moyens d'interconnexion permettant de couper le passage d'eau dans le conduit de by-pass en gardant la sortie d'eau grise ouverte selon un premier mode de fonctionnement du système, et d'assurer le passage d'eau dans le conduit de by-pass en gardant la sortie d'eau grise fermée selon un deuxième mode de fonctionnement du système ;
- il comporte, après la sortie d'eau grise ouverte, des clapets et une pompe pour faciliter le transfert des eaux grises vers les toilettes ;
- le réservoir d'eau grise comporte une sortie d'évacuation d'eaux grises reliée à l'extérieur du système par un conduit d'évacuation, un conduit d'évacuation supplémentaire reliant le conduit d'eau grise et le conduit d'évacuation ;
- les moyens d'interconnexion sont des vannes.

L'invention sera mieux comprise à la lecture de la description qui va suivre, donnée uniquement à titre d'exemple et faite en se référant aux dessins, sur lesquels :
- la figure 1 est une vue schématique d'un système de stockage et de distribution d'eau suivant l'invention ;
- la figure 2 est une vue schématique illustrant le fonctionnement du système de la figure 1 selon un premier mode de fonctionnement ;
- la figure 3 est une vue schématique illustrant le fonctionnement du système de la figure 1 selon un deuxième mode de fonctionnement ;
- la figure 4 est une vue schématique d'un système de stockage et de distribution d'eau d'après une variante de l'invention.

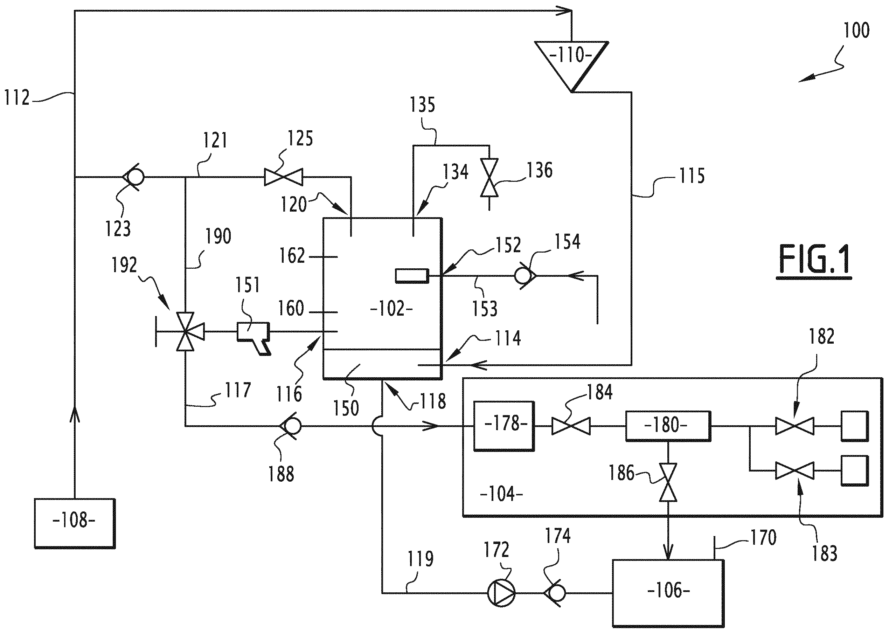

Un système 100 de stockage et de distribution d'eau selon l'invention est illustré sur la figure 1. Un tel système 100 est destiné à être installé dans une installation sanitaire d'un véhicule ferroviaire.

Le système 100 comporte un réservoir 102 d'eau grise apte à stocker et à distribuer des eaux grises, des toilettes 104 aptes à recevoir des eaux grises du réservoir 102 d'eau grise pour une opération de chasse, et un réservoir 106 d'eau usée apte à recevoir et à stocker des eaux grises du réservoir 102 d'eau grise et des produits de chasse des toilettes 104.

Le système 100 est alimenté avec de l'eau propre par une source d'eau propre. Cette source d'eau propre est par exemple un réservoir 108 d'eau propre monté sur le véhicule ferroviaire et rempli avec de l'eau propre lors d'un stationnement du véhicule.

Dans l'exemple de réalisation de l'invention présenté sur la figure 1, les eaux grises stockées dans le réservoir 102 d'eau grises proviennent d'une source d'eau grise 110 et sont, par exemple, les eaux de lavage issues d'un lavabo 110.

Le lavabo 110 est alimenté avec de l'eau propre provenant du réservoir 108 d'eau propre par un conduit 112 principal.

Bien entendu, d'autres dispositifs rejetant des eaux de lavage, ou plus généralement des eaux grises, comme par exemple une douche ou une pluralité de lavabos, sont aussi compatibles avec l'invention.

Selon un exemple de réalisation, la circulation de l'eau propre dans le conduit principal 112 est assurée par une pompe électrique (non représentée sur la figure 1).

Selon un autre exemple de réalisation, le réservoir d'eau propre 108 est placé dans la partie la plus haute du système 100. La circulation de l'eau propre dans le conduit principal 112 est ainsi assurée par la gravité.

Suivant l'exemple de la figure 1, le lavabo 110 est apte à rejeter des eaux de lavage dans le réservoir 102 d'eau grise. A cet effet, le réservoir 102 comporte à sa partie inférieure une entrée 114 d'eau grise qui est reliée au lavabo 110 par un conduit 115 d'eau grise.

Le lavabo 110 est placé au-dessus du réservoir 102 d'eau grise, ce qui permet de faire circuler des eaux grises dans le conduit d'eau grise 115 par la gravité.

Le réservoir 102 comporte en outre une sortie 116 d'eau grise reliée aux toilettes 104 par un conduit 117 d'eau de chasse des toilettes, afin de permettre l'utilisation des eaux grises comme liquide de chasse des toilettes 104.

Par ailleurs, le réservoir 102 d'eau grise est apte à être vidé directement dans le réservoir d'eau usée 106. A cette fin, il comporte une sortie 118 de vidange reliée au réservoir d'eau usée 106 par un conduit 119 de vidange.

Le réservoir 102 comprend aussi une entrée 120 d'eau propre reliée au conduit principal 112 par un conduit 121 d'eau propre.

Le conduit d'eau propre 121 comporte un clapet anti-retour anticontamination 123 permettant le passage de l'eau uniquement en provenance du réservoir 108 d'eau propre. Ce clapet assure qu'aucune bactérie venant des toilettes 104 ni du réservoir 102 d'eau grise ne puisse contaminer le réservoir 108 d'eau propre ou le conduit principal 112. Ce conduit 121 comporte en outre une vanne 125 destinée à réguler le passage de l'eau propre dans le réservoir 102.

Le réservoir d'eau grise 102 comporte par ailleurs une sortie 134 d'évacuation d'eaux grises située dans sa partie supérieure.

Cette sortie 134 est reliée à l'extérieur par un conduit 135 d'évacuation comportant une vanne 136 à son extrémité libre.

Les eaux grises entrant dans le système 100 par le conduit d'eau grise 115 sont traitées par un filtre 150 situé au niveau de l'entrée d'eau grise 114 dans le réservoir 102.

Ce filtre 150 permet par exemple de stopper de grosses particules venant avec des eaux grises et/ou de désodoriser les eaux grises en y ajoutant des produits chimiques.

Un filtre 151 supplémentaire est par ailleurs installé au niveau de la sortie 116 d'eau grise.

Selon l'exemple de réalisation représenté, le réservoir 102 comporte aussi une entrée de rinçage 152 reliée à l'extérieur par un conduit 153 de rinçage et permettant le nettoyage du réservoir 102.

Le conduit de rinçage comporte à son extrémité libre un clapet anti-retour 154 empêchant la fuite d'eaux grises à l'extérieur.

Le fonctionnement du réservoir 102 d'eau grise est assuré par un premier détecteur 160 permettant de détecter un niveau bas des eaux grises et par un deuxième détecteur 162 permettant de détecter un niveau haut des eaux grises.

Ainsi, les deux détecteurs sont adaptés pour commander le remplissage du réservoir 102 avec de l'eau propre via le conduit d'eau propre 121 en ouvrant la vanne 125, ou la vidange du réservoir 102 dans le réservoir d'eau usée 106 via le conduit de vidange 119.

La vanne 136 est normalement ouverte mais quand le train envoie l'information que le train est, par exemple, dans un tunnel, la vanne est fermée. Ainsi, dans le cas de débordement du réservoir 102, la sortie 134 permet d'évacuer des eaux grises par débordement à l'extérieur du système 100.

Le réservoir d'eau usée 106 est maintenu sous la pression atmosphérique à l'aide d'un évent 170.

La circulation des eaux via le conduit 119 vers le réservoir d'eau usée 106 est assurée par une pompe 172.

Le conduit 119 comporte en outre un clapet anti-retour 174 empêchant le passage des eaux usées dans le réservoir 102 d'eau grise.

Les toilettes 104 comportent une cuvette 178 reliée au réservoir d'eau usée 106 via un réservoir intermédiaire 180.

Ce réservoir intermédiaire 180 est muni de moyens 182 de mise sous vide sélective, et de moyens 183 de mise sous pression sélective. Il est relié par ailleurs à la cuvette 178 par une vanne 184 d'entrée et au réservoir d'eau usée 106 par une vanne 186 de sortie.

Le réservoir 180, les moyens 182 et 183, la vanne 184 et la vanne 186 sont compris dans les toilettes 104.

Finalement, le conduit 117 d'eau de chasse des toilettes comporte un clapet anti-retour 188 permettant le passage des eaux dans le conduit 117 uniquement en provenance du réservoir 102 d'eau grise.

Selon l'exemple de réalisation de l'invention représenté, le système 100 comporte en outre un conduit 190 de by-pass reliant le conduit 121 d'eau propre au conduit 117 d'eau de chasse des toilettes et contournant le réservoir 102 d'eau grise.

Le conduit de by-pass 190 permet d'alimenter les toilettes 104 avec de l'eau propre dans le cas de dysfonctionnement du réservoir 102 d'eau grise.

Ainsi, le système 100 comporte des moyens 192 d'interconnexion permettant de couper le passage d'eau dans le conduit 190 de by-pass en gardant la sortie 116 d'eau grise ouverte selon un premier mode de fonctionnement du système 100, et d'assurer le passage d'eau dans le conduit 190 de by-pass en gardant la sortie 116 d'eau grise fermée selon un deuxième mode de fonctionnement du système 100.

Le premier mode de fonctionnement du système 100 correspond au fonctionnement normal du système 100, le deuxième mode de fonctionnement au fonctionnement dégradé du système 100.

Les moyens d'interconnexion 192 sont par exemple représentés par une vanne à trois voies.

Les deux modes de fonctionnement du système 100 selon cet exemple de réalisation de l'invention vont maintenant être décrits.

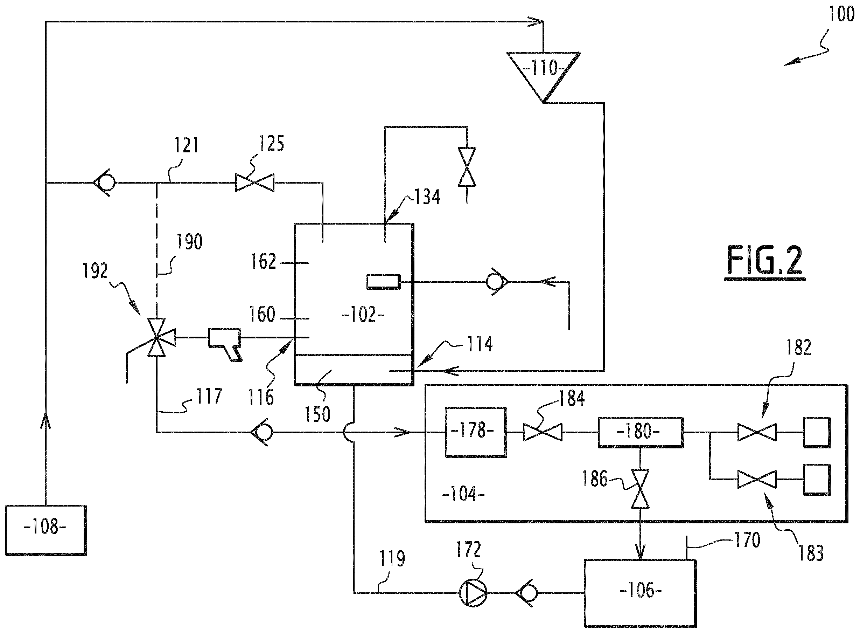

Le fonctionnement du système 100 dans son mode normal de fonctionnement est illustré sur la figure 2.

Ainsi, le conduit de by-pass 190 est fermé et la sortie d'eau grise 116 est ouverte par les moyens 192 d'interconnexion.

Dans ce mode de fonctionnement, les eaux grises rejetées par le lavabo 110 sont reçues par le réservoir d'eau grise 102 via l'entrée 114 d'eau grise.

Ici, elles sont filtrées par le filtre 150 et sont temporairement stockées.

Si le niveau des eaux grises contenues dans le réservoir 102 d'eau grise dépasse un niveau supérieur, le détecteur 162 commande l'actionnement de la pompe 172. Le pompage des eaux grises vers le réservoir d'eau usée 106 dure jusqu'à ce que leur niveau dans le réservoir 102 baisse au-dessous dudit niveau supérieur.

Si au contraire, le niveau des eaux grises contenues dans le réservoir 102 d'eau grise est inférieur à un niveau inférieur, le détecteur 160 commande l'ouverture de la vanne 125. De l'eau propre passe ainsi dans le réservoir 102 via le conduit 121 d'eau propre, jusqu'à ce que son niveau devienne supérieur audit niveau inférieur. Le détecteur 160 commande alors la fermeture de la vanne 125.

Si le conduit de vidange 119 est bouché ou la pompe 172 en panne, le réservoir d'eau grise 102 peut tout de même rejeter des eaux grises par débordement à l'extérieur via la sortie d'évacuation 134.

Avant chaque opération de chasse des toilettes 104, les vannes 184 et 186 du réservoir intermédiaire 180 sont fermées.

Si une opération de chasse des toilettes 104 est requise, elle commence par une mise sous vide du réservoir intermédiaire 180. Pour cela, les moyens de mise sous vide 182 créent un vide dans ce réservoir.

La vanne d'entrée 184 est ensuite ouverte, en créant ainsi une zone de dépression au niveau de la cuvette 178.

Cette zone de dépression aspire dans le réservoir 180 intermédiaire des produits de chasse de la cuvette 178 avec une partie des eaux grises contenues dans le réservoir d'eau grise 102 via le conduit 117. La vanne d'entrée 184 est ensuite fermée.

Les moyens 183 mettent ensuite sous pression le réservoir 180, puis la vanne de sortie 186 est ouverte pour chasser les effluents dans le réservoir 106 d'eau usée, qui est maintenu sous la pression atmosphérique à l'aide de l'évent 170.

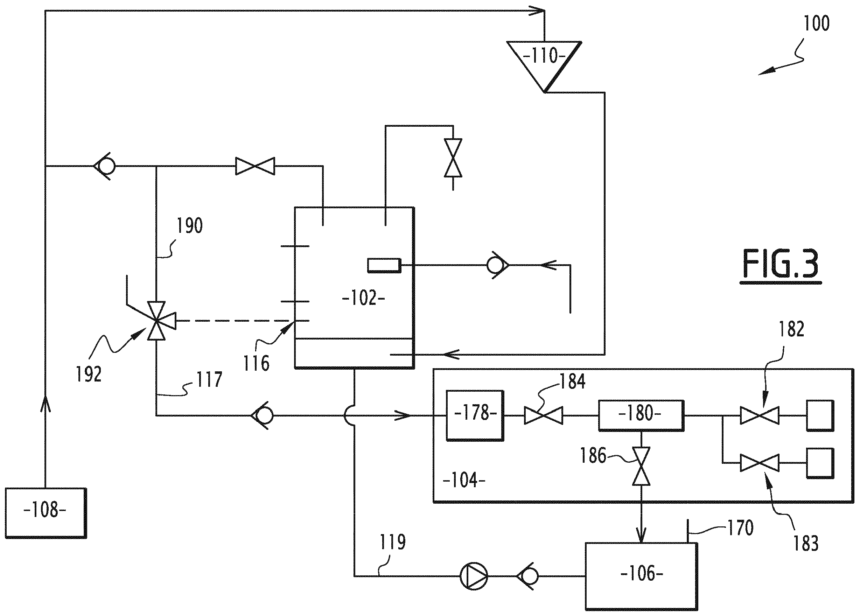

Le fonctionnement du système 100 dans son mode de fonctionnement dégradé est illustré sur la figure 3.

Dans ce cas, les moyens 192 d'interconnexion ouvrent le passage de l'eau propre via le conduit 190 de by-pass et ferment la sortie 116 d'eau grise.

Ce mode de fonctionnement du système 100 est par exemple appliqué dans le cas de dysfonctionnement du réservoir 102 ou du lavabo 110.

Les moyens d'interconnexion 192 permettent donc de contourner le réservoir 102 et d'alimenter les toilettes 104 avec de l'eau propre afin de les garder fonctionnelles.

Ainsi, si une opération de chasse des toilettes 104 est requise, les produits chassés sont aspirés avec de l'eau propre provenant du réservoir 108 d'eau propre. Le fonctionnement des réservoirs 180 et 106 ainsi que des vannes 184 et 186 reste identique au mode de fonctionnement normal du système 100.

Un avantage particulier de la présente invention concerne l'utilisation de l'eau grise du lavabo 110 avec des toilettes 104 avec un réservoir intermédiaire 180 et un réservoir d'eau usée 106 à pression atmosphérique. Le vide est créé uniquement dans le réservoir intermédiaire 180, dont les dimensions sont sensiblement inférieures à celles du réservoir d'eau usée 106, ce qui rend ce système 100 relativement économique en exploitation.

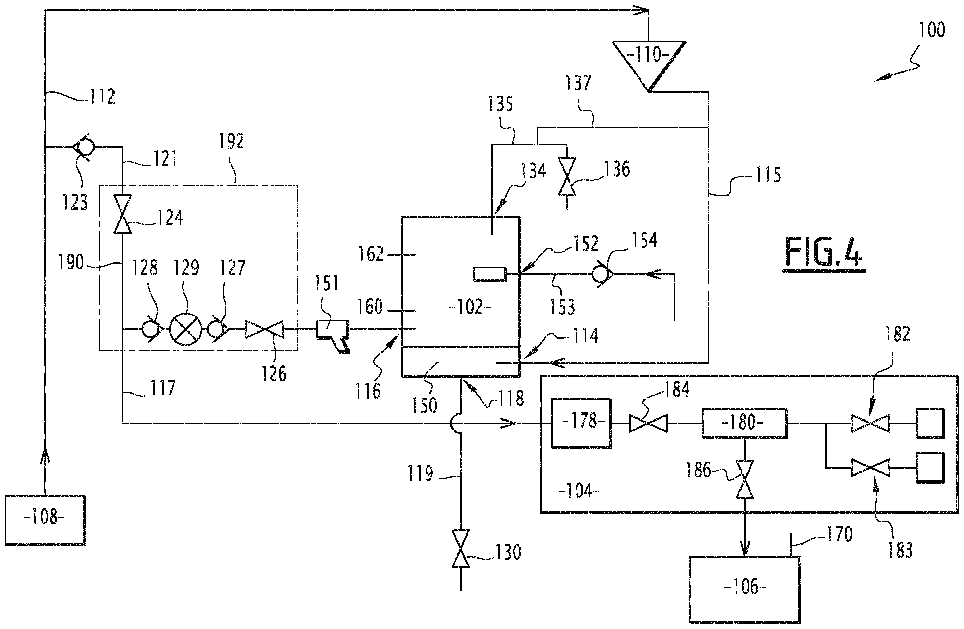

Une variante du système 100 de stockage et de distribution d'eau comprenant un by-pass automatique et un rejet sur les voies est illustrée sur la figure 4.

Dans certains cas, il est acceptable que le rejet des eaux grises puisse être effectué directement sur les voies. Ainsi, dans cet exemple de réalisation, le réservoir 102 d'eau grise est apte à être vidé directement sur les voies, et non plus dans le réservoir d'eau usée 106. A cette fin, le conduit 119 de vidange comprend une vanne 130 et une extrémité libre ouverte en direction de la voie, le conduit 119 n'étant plus reliée au réservoir d'eau usée 106. La vanne 130 est par exemple une vanne à manchon, de manière à être compatible avec un passage par des fluides comportant des particules solides. Dans le cas d'un train haute vitesse, l'ouverture de la vanne 130 est contrôlée, de manière à rester fermée lors d'un passage d'un tunnel. Aussi, le volume du réservoir 102 est dimensionné en conséquence pour être compatible avec la durée maximale de présence du train dans un tunnel. A titre d'exemple, le volume du réservoir 102 est augmenté d'un volume équivalent au produit du nombre d'utilisations par heure par le temps maximal passé dans un tunnel par la quantité d'eau délivrée par le robinet du lavabo 110.

Par ailleurs, dans cette variante, le système 100 de stockage et de distribution d'eau comprend un by-pass automatique permettant d'augmenter la disponibilité du toilette. A cet effet, le conduit 121 d'eau propre est relié uniquement au conduit 190 de by-pass, et non plus également au réservoir 102 via une entrée 120 d'eau propre. De ce fait, le réservoir 102 n'est plus relié au réservoir 108 d'eau propre, et la vanne 125 a donc été également supprimée.

Le conduit de by-pass 190 permet ainsi d'alimenter en toutes circonstances les toilettes 104 avec de l'eau propre, et non plus uniquement dans le cas de dysfonctionnement du réservoir 102 d'eau grise.

Ainsi, les moyens d'interconnexion 192 comprennent deux vannes 124 et 126 dont les sorties se rejoignent sur le conduit 117, et non une vanne trois voies manuelle. Une première vanne 124 est prévue sur le conduit de by-pass 190. La seconde vanne 126 est prévue après la sortie 116 en aval du filtre 151. Cet agencement permet de couper le passage d'eau dans le conduit 190 de by-pass en gardant la sortie 116 d'eau grise ouverte selon un premier mode de fonctionnement « non-bypass » du système 100, et d'assurer le passage d'eau dans le conduit 190 de by-pass en gardant la sortie 116 d'eau grise fermée selon le deuxième mode de fonctionnement « bypass » du système 100.

Lorsque le niveau des eaux grises contenues dans le réservoir 102 d'eau grise est inférieur au niveau inférieur, le détecteur 160 commande l'ouverture de la vanne 124 et la fermeture de la vanne 126. De l'eau propre passe directement du réservoir 108 via les conduit 121 d'eau propre, 190, et 117, jusqu'aux toilettes 104, le réservoir 102 n'étant plus alimenté.

Lorsque le niveau des eaux grises contenues dans le réservoir 102 d'eau grise est entre le niveau inférieur et le niveau supérieur, le détecteur 160 commande la fermeture de la vanne 124 et l'ouverture de la vanne 126. Les eaux grises sont alors transférées vers les toilettes 104 lorsque nécessaire jusqu'à ce que leur niveau dans le réservoir 102 baisse au-dessous dudit niveau inférieur. Dans un exemple de réalisation, représenté sur la figure 4, le système 100 comprend, après la sortie 116 d'eau grise ouverte, et de préférence en aval de la vanne 126, des clapets 127, 128 et une pompe 129 disposée entre ces clapets pour faciliter ce transfert, notamment dans le cas où le réservoir 102 n'est pas au-dessus du toilette 104, ou si le toilette 104 ne possède pas sa propre pompe à d'eau d'aspiration.

Lorsque le niveau des eaux grises contenues dans le réservoir 102 d'eau grise dépasse un niveau supérieur, le détecteur 162 commande l'actionnement de la vanne 130. Les eaux grises sont alors transférées vers les voies, jusqu'à ce que leur niveau dans le réservoir 102 baisse au-dessous dudit niveau supérieur.

Les eaux grises entrant dans le système 100 par le conduit d'eau grise 115 sont traitées par le filtre 150 situé au niveau de l'entrée d'eau grise 114 dans le réservoir 102. Pour pallier toute défaillance de ce filtre, par exemple en cas de filtre bouché, un capteur de niveau, non représenté, est ajouté dans le conduit d'eau grise 115, de manière à détecter toute présence d'eau permanente, synonyme de filtre 150 bouché, dans le conduit d'eau grise 115. Après détection, le capteur de niveau déclenche automatiquement un by-pass du système 100, en commandant l'ouverture de la vanne 124 et la fermeture de la vanne 126.

D'autre part, un conduit d'évacuation supplémentaire 137 est ajouté entre le conduit d'eau grise 115 et le conduit 135 d'évacuation. Ainsi, dans le cas d'une remontée d'eau grise dans le conduit d'eau grise 115 consécutive à un filtre 150 bouché par exemple, l'évacuation de l'eau grise s'effectue via le conduit d'évacuation supplémentaire 137 vers la voie au travers de l'extrémité libre du conduit 135 d'évacuation. Dans le cas où la vanne 136 est fermée, l'évacuation s'effectue alors dans le réservoir 102.

## Revendications

1. Système (100) de stockage et de distribution d'eau, notamment pour une installation sanitaire d'un véhicule ferroviaire, du type comprenant :
- une source d'eau grise (110) ;
- un réservoir (102) d'eau grise apte à stocker et à distribuer des eaux grises provenant de la source d'eau grise (110), une entrée (114) d'eau grise, une sortie (116) d'eau grise et une sortie (118) de vidange ;
- des toilettes (104) comportant une cuvette (178) et aptes à recevoir des eaux grises du réservoir (102) d'eau grise pour une opération de chasse ;
- un réservoir (106) d'eau usée apte à recevoir et à stocker des eaux grises du réservoir (102) d'eau grise et des produits de chasse des toilettes (104) ;
- un conduit (121) d'eau propre relié à une source d'eau propre (108) ;
- un conduit (115) d'eau grise reliant l'entrée (114) d'eau grise avec la source d'eau grise (110) ;
- un conduit (117) d'eau de chasse des toilettes reliant la sortie (116) d'eau grise avec les toilettes (104) ;
**caractérisé en ce que** :
- le réservoir (106) d'eau usée est muni d'un évent (170) pour son maintien sous la pression atmosphérique ; et
- les toilettes (104) comportent en outre un réservoir (180) intermédiaire, muni de moyens (182) de mise sous vide sélective, relié par une vanne (184) d'entrée à la cuvette (178) et par une vanne (186) de sortie au réservoir (106) d'eau usée.

2. Système (100) selon la revendication 1, **caractérisé en ce que** le réservoir (102) d'eau grise comporte une entrée (120) d'eau propre relié au conduit (121) d'eau propre, et **en ce que** le système (100) comprend un conduit (119) de vidange reliant la sortie (118) de vidange avec le réservoir (106) d'eau usée, le conduit (119) de vidange comportant une pompe (172) permettant de transférer les eaux grises du réservoir (102) d'eau grise vers le réservoir (106) d'eau usée.

3. Système (100) selon l'une quelconque des revendications précédentes, **caractérisé en ce que** le réservoir intermédiaire (180) est en outre muni de moyens (183) de mise sous pression sélective.

4. Système (100) selon l'une quelconque des revendications précédentes, **caractérisé en ce que** la source d'eau grise est un lavabo (110) alimenté avec de l'eau propre par la source d'eau propre (108) et apte à rejeter de l'eau grise dans le conduit (115) d'eau grise après chaque utilisation.

5. Système (100) selon l'une quelconque des revendications précédentes, **caractérisé en ce que** le conduit (119) de vidange comporte en outre un clapet anti-retour (174) permettant le passage des eaux uniquement en provenance du réservoir (102) d'eau grise.

6. Système (100) selon l'une quelconque des revendications précédentes, **caractérisé en ce que** le conduit (121) d'eau propre comporte un clapet anti-retour (123) permettant le passage de l'eau propre uniquement en provenance de la source d'eau propre.

7. Système (100) selon la revendication 5, **caractérisé en ce que** le conduit (121) d'eau propre comporte en outre une vanne (125) permettant de réguler le passage de l'eau propre dans ce conduit.

8. Système (100) selon la revendication 6, **caractérisé en ce que** le réservoir (102) d'eau grise comporte un premier détecteur (160) permettant de détecter un niveau bas des eaux grises contenues dans le réservoir (102) d'eau grise et un deuxième détecteur (162) permettant de détecter un niveau haut des eaux grises contenues dans le réservoir (102) d'eau grise, les deux détecteurs (160, 162) étant aptes à commander le remplissage ou la vidange du réservoir (102) d'eau grise.

9. Système (100) selon l'une quelconque des revendications précédentes, **caractérisé en ce que** le réservoir (102) d'eau grise comporte une sortie (134) d'évacuation d'eaux grises reliée à l'extérieur du système (100) par un conduit d'évacuation (135).

10. Système (100) selon l'une quelconque des revendications précédentes, **caractérisé en ce que** le réservoir d'eau grise (102) comporte une entrée (152) de rinçage.

11. Système (100) selon l'une quelconque des revendications précédentes, **caractérisé en ce qu'**il comporte en outre :
- un conduit (190) de by-pass reliant le conduit (121) d'eau propre avec le conduit (117) d'eau de chasse des toilettes et contournant le réservoir (102) d'eau grise ; et
- des moyens (192) d'interconnexion permettant de couper le passage d'eau dans le conduit (190) de by-pass en gardant la sortie (116) d'eau grise ouverte selon un premier mode de fonctionnement du système (100), et d'assurer le passage d'eau dans le conduit (190) de by-pass en gardant la sortie (116) d'eau grise fermée selon un deuxième mode de fonctionnement du système (100).

12. Système (100) selon la revendication 11, **caractérisé en ce qu'**il comporte en outre, après la sortie (116) d'eau grise ouverte, des clapets (127, 128) et une pompe (129) pour faciliter le transfert des eaux grises vers les toilettes (104).

13. Système (100) selon l'une quelconque des revendications 11 et 12, **caractérisé en ce que** le réservoir (102) d'eau grise comporte une sortie (134) d'évacuation d'eaux grises reliée à l'extérieur du système (100) par un conduit d'évacuation (135), un conduit d'évacuation supplémentaire (137) reliant le conduit d'eau grise (115) et le conduit (135) d'évacuation.

14. Système (100) selon l'une quelconque des revendications 11, 12 et 13, **caractérisé en ce que** les moyens (192) d'interconnexion comprennent des vannes (124, 126).

## Patentansprüche

1. System (100) zur Speicherung und Verteilung von Wasser, insbesondere für eine Sanitäranlage eines Schienenfahrzeugs, der Art, die umfasst:
- eine Quelle (110) für Grauwasser;
- einen Behälter (102) für Grauwasser, der geeignet ist, Grauwässer, die von der Quelle (110) für Grauwasser herkommen, zu speichern und zu verteilen, einen Einlass (114) für Grauwasser, einen Auslass (116) für Grauwasser und einen Entleerungsauslass (118);
- Toiletten (104), die eine Schüssel (178) aufweisen und geeignet sind, die Grauwässer vom Behälter (102) für Grauwasser zum Spülen aufzunehmen;
- einen Behälter (106) für Abwasser, der geeignet ist, Grauwässer des Behälters (102) für Grauwasser und Produkte der Spülung der Toiletten (104) aufzunehmen und zu speichern;
- eine Leitung (121) für sauberes Wasser, die an eine Quelle (108) für sauberes Wasser angeschlossen ist;
- eine Leitung (115) für Grauwasser, die den Einlass (114) für Grauwasser mit der Quelle (110) für Grauwasser verbindet;
- eine Leitung (117) für Spülwasser der Toiletten, die den Auslass (116) für Grauwasser mit den Toiletten (104) verbindet;
**dadurch gekennzeichnet, dass**:
- der Behälter (106) für Abwasser des Wassers mit einer Entlüftung (170) ausgerüstet ist, um ihn unter atmosphärischem Druck zu halten; und
- die Toiletten (104) außerdem einen Zwischenbehälter (180) aufweisen, der mit Mitteln (182) zum selektiven Evakuieren ausgerüstet ist und der über ein Eingangsventil (184) mit der Schüssel (178) und über ein Ausgangsventil (186) mit dem Behälter (106) für Abwasser verbunden ist.

2. System (100) nach Anspruch 1, **dadurch gekennzeichnet, dass** der Behälter (102) für Grauwasser einen Einlass (120) für sauberes Wasser aufweist, der mit der Leitung (121) für sauberes Wasser verbunden ist, und dass das System (100) eine Leitung (119) zum Entleeren umfasst, die den Entleerungsauslass (118) mit dem Behälter (106) für Abwasser verbindet, wobei die Leitung (119) zum Entleeren eine Pumpe (172) aufweist, die die Überführung der Grauwässer des Behälters (102) für Grauwasser zu dem Behälter (106) für Abwasser gestattet.

3. System (100) nach einem beliebigen der vorhergehenden Ansprüche, **dadurch gekennzeichnet, dass** der Zwischenbehälter (180) außerdem mit Mitteln (183) zur selektiven Druckbeaufschlagung ausgerüstet ist.

4. System (100) nach einem beliebigen der vorhergehenden Ansprüche, **dadurch gekennzeichnet, dass** die Quelle für Grauwasser ein Waschbecken (110) ist, das von der Quelle (108) für sauberes Wasser mit sauberem Wasser gespeist wird und das geeignet ist, nach jeder Benutzung das Grauwasser in die Leitung (115) für Grauwasser ablaufen zu lassen.

5. System (100) nach einem beliebigen der vorhergehenden Ansprüche, **dadurch gekennzeichnet, dass** die Leitung (119) zum Entleeren außerdem ein Rückschlagventil (174) aufweist, das den Durchfluss der nur vom Behälter (102) für Grauwasser herkommenden Wässer gestattet.

6. System (100) nach einem beliebigen der vorhergehenden Ansprüche, **dadurch gekennzeichnet, dass** die Leitung (121) für sauberes Wasser ein Rückschlagventil (123) aufweist, das den Durchfluss des nur von der Quelle für sauberes Wasser herkommenden sauberen Wassers gestattet.

7. System (100) nach Anspruch 5, **dadurch gekennzeichnet, dass** die Leitung (121) für sauberes Wasser außerdem ein Ventil (125) aufweist, das das Regeln des Durchflusses von sauberem Wasser in dieser Leitung gestattet.

8. System (100) nach Anspruch 6, **dadurch gekennzeichnet, dass** der Behälter (102) für Grauwasser einen ersten Detektor (160), der das Erfassen eines niedrigen Pegels der in dem Behälter (102) für Grauwasser enthaltenen Grauwässer gestattet, und einen zweiten Detektor (162) aufweist, der die Erfassung eines hohen Pegels der in dem Behälter (102) für Grauwasser enthaltenen Grauwässer gestattet, wobei die zwei Detektoren (160, 162) geeignet sind, die Füllung oder die Entleerung des Behälter (102) für Grauwasser zu steuern.

9. System (100) nach einem beliebigen der vorhergehenden Ansprüche, **dadurch gekennzeichnet, dass** der Behälter (102) für Grauwasser einen Auslass (134) zum Abfluss von Grauwässern aufweist, der über eine Abflussleitung (135) mit dem Außenraum des Systems (100) verbunden ist.

10. System (100) nach einem beliebigen der vorhergehenden Ansprüche, **dadurch gekennzeichnet, dass** der Behälter (102) für Grauwasser einen Spüleinlass (152) aufweist.

11. System (100) nach einem beliebigen der vorhergehenden Ansprüche, **dadurch gekennzeichnet, dass** es außerdem aufweist:
- eine Bypassleitung (190), die die Leitung (121) für sauberes Wasser mit der Leitung (117) für Spülwasser der Toiletten verbindet und den Behälter (102) für Grauwasser umgeht; und
- Verbindungsmittel (192), die den Durchfluss von Wasser in der Bypassleitung (190) sperren, wobei der Auslass (116) für Grauwasser gemäß einem ersten Betriebsmodus des Systems (100) offen gehalten wird, und die den Durchfluss von Wasser in der Bypassleitung (190) sicherstellen, wobei der Auslass (116) für Grauwasser gemäß einem zweiten Betriebsmodus des Systems (100) geschlossen gehalten wird.

12. System (100) nach Anspruch 11, **dadurch gekennzeichnet, dass** es außerdem nach dem offenen Auslass (116) für Grauwasser Ventile (127, 128) und eine Pumpe (129) aufweist, um die Überführung der Grauwässer in die Toiletten (104) zu erleichtern.

13. System (100) nach einem beliebigen der Ansprüche 11 und 12, **dadurch gekennzeichnet, dass** der Behälter (102) für Grauwasser einen Auslass (134) zum Abfluss von Grauwässern aufweist, der über eine Abflussleitung (135) mit dem Außenraum des Systems (100) verbunden ist, wobei eine zusätzliche Abflussleitung (137) die Leitung (115) für Grauwasser mit der Abflussleitung (135) verbindet.

14. System (100) nach einem beliebigen der Ansprüche 11, 12 und 13, **dadurch gekennzeichnet, dass** die Verbindungsmittel (192) Ventile (124, 126) umfassen.

## Claims

1. System (100) for storing and dispensing water, notably for a sanitary installation of a railway vehicle, of the type comprising:
- a grey-water source (110);
- a grey-water tank (102) able to store and dispense grey water coming from the grey-water source (110), a grey-water inlet (114), a grey-water outlet (116) and a drain outlet (118);
- toilets (104) comprising a toilet bowl (178) and able to receive grey water from the grey-water tank (102) for a flushing operation;
- a waste-water tank (106) able to receive and store grey water from the grey-water tank (102) and products from the flushing of the toilets (104);
- a clean-water pipe (121) connected to a clean-water source (108);
- a grey-water pipe (115) connecting the grey-water inlet (114) with the grey-water source (110);
- a pipe (117) for the toilet-flushing water and which connects the grey-water outlet (116) with the toilets (104);
**characterized in that**
- the waste-water tank (106) is fitted with a vent (170) to keep it under atmospheric pressure; and
- the toilets (104) further comprise an intermediate tank (180), equipped with selective-evacuation means (182), and connected to the toilet bowl (178) by an inlet valve (184) and to the waste-water tank (106) by an outlet valve (186).

2. System (100) according to Claim 1, **characterized in that** the grey-water tank (102) comprises a clean-water inlet (120) connected to the clean-water pipe (121), and **in that** the system (100) comprises a drain pipe (119) connecting the drain outlet (118) with the waste-water tank (106), the drain pipe (119) comprising a pump (172) allowing the grey water to be transferred from the grey-water tank (102) to the waste-water tank (106) .

3. System (100) according to either one of the preceding claims, **characterized in that** the intermediate tank (180) is further equipped with selective-pressurizing means (183).

4. System (100) according to any one of the preceding claims, **characterized in that** the grey-water source is a basin (110) fed with clean water from the clean-water source (108) and able to discharge grey water into the grey-water pipe (115) after each use.

5. System (100) according to any one of the preceding claims, **characterized in that** the drain pipe (119) further comprises a nonreturn valve (174) allowing water to pass only in the direction coming from the grey-water tank (102).

6. System (100) according to any one of the preceding claims, **characterized in that** the clean-water pipe (121) comprises a nonreturn valve (123) allowing clean water to pass only in the direction coming from the clean-water source.

7. System (100) according to Claim 5, **characterized in that** the clean-water pipe (121) further comprises a valve (125) making it possible to regulate the passage of the clean water along this pipe.

8. System (100) according to Claim 6, **characterized in that** the grey-water tank (102) comprises a first detector (160) making it possible to detect a low grey-water level in the grey-water tank (102) and a second detector (162) making it possible to detect a high grey-water level in the grey-water tank (102), the two detectors (160, 162) being able to command the filling or emptying of the grey-water tank (102).

9. System (100) according to any one of the preceding claims, **characterized in that** the grey-water tank (102) comprises a discharge outlet (134) for grey water which outlet is connected to the outside of the system (100) by a discharge pipe (135).

10. System (100) according to any one of the preceding claims, **characterized in that** the grey-water tank (102) comprises a rinsing inlet (152).

11. System (100) according to any one of the preceding claims, **characterized in that** it further comprises:
- a bypass pipe (190) connecting the clean-water pipe (121) to the pipe (117) for the toilet-flushing water and bypassing the grey-water tank (102); and
- interconnection means (192) making it possible to cut off the passage of water through the bypass pipe (190) while keeping the grey-water outlet (116) open according to a first mode of operation of the system (100), and making it possible to allow water to pass along the bypass pipe (190) while keeping the grey-water outlet (116) closed according to a second mode of operation of the system (100).

12. System (100) according to Claim 11, **characterized in that** it further comprises, after the open grey-water outlet (116), check valves (127, 128) and a pump (129) to facilitate the transfer of grey water towards the toilets (104).

13. System (100) according to either one of Claims 11 and 12, **characterized in that** the grey-water tank (102) comprises a grey-water discharge outlet (134) connected to the outside of the system (100) by a discharge pipe (135), an additional discharge pipe (137) connecting the grey-water pipe (115) and the discharge pipe (135).

14. System (100) according to any one of Claims 11, 12 and 13, **characterized in that** the interconnection means (192) comprise valves (124, 126).
